(19)

Europäisches
Patentamt
European
Patent Office
Office européen
des brevets

(11) **EP 1 811 699 B1**

(12) **EUROPEAN PATENT SPECIFICATION**

(45) Date of publication and mention
of the grant of the patent:
**12.01.2011 Bulletin 2011/02**

(21) Application number: **05817661.1**

(22) Date of filing: **29.11.2005**

(51) Int Cl.:
**H04W 16/12** (2009.01)

(86) International application number:
**PCT/CN2005/002046**

(87) International publication number:
**WO 2006/058491 (08.06.2006 Gazette 2006/23)**

(54) **Soft frequency reuse in a wireless communication system**

Soft-Frequenz-Wiederverwendung in einem drahtlosen Nachrichtenübertragungssystem

Réutilisation d'une fréquence douce dans un système de communication sans fil

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **01.12.2004 CN 200410096809
20.04.2005 CN 200510067540**

(43) Date of publication of application:
**25.07.2007 Bulletin 2007/30**

(73) Proprietor: **Huawei Technologies Co., Ltd.
Longgang District, Shenzhen
Guangdong 518129 (CN)**

(72) Inventor: **YANG, Xuezhi,
Huawei Administration Bld
Shenzhen,
Guangdong 518129 (CN)**

(74) Representative: **Körber, Martin Hans
Mitscherlich & Partner
Patent- und Rechtsanwälte
Postfach 33 06 09
80066 München (DE)**

(56) References cited:
**EP-A- 0 782 360          WO-A1-97/11571
CN-A- 1 357 179          KR-A- 2004 076 438
US-A1- 2002 187 811      US-B1- 6 370 383**

**Description**

**Field of the Invention**

The present invention relates to frequency reuse techniques, and particularly, to a method and an apparatus for implementing soft frequency reuse in a wireless communication system.

**Background of the Invention**

The next generation mobile communication system needs to support multiple services such as voice, data, audio, video, image and so on, therefore, it is desirable for the next generation mobile communication system to support a higher data transmission rate, higher spectrum efficiency and better Quality of Service (QoS) guarantee mechanisms, and provide better mobility support and wireless network coverage, so as to provide users with communication services at all times and all places. The second generation mobile communication system uses the Time Division Multiple Access (TDMA) and the narrowband Code Division Multiple Access (CDMA) as dominate access techniques, e.g., the Global System for Mobile Communications (GSM) and the CDMA IS-95 mobile communications system. The third generation mobile communication system uses the wideband CDMA as dominate access techniques, e.g., the Universal Mobile Telecommunication System (UMTS) and the Wideband CDMA (WCDMA) mobile communication system. In the CDMA technique, data symbols of one user will occupy the entire width of carrier frequency and different users or user data are distinguished by means of spread spectrum codes. Since the multi-path channel makes the orthogonality between spread spectrum codes impossible, the CDMA technique becomes a self-interference system. Therefore, the system capacity and spectrum efficiency of the current CDMA technique are unable to meet the requirements of wideband wireless communications.

Since the 1990's, a multi-carrier technique has been in the spotlight among wideband wireless communication techniques. It divides one wideband carrier into multiple sub-carriers on which data are transmitted in parallel. In most system applications, the width of a sub-carrier is less than the coherent bandwidth of the propagation channel. In this way, every sub-carrier demonstrates flat fading in a frequency-selective channel, which makes it possible to reduce inter-symbol interference and may support high-speed data transmission without complex channel equalization required. There are various multi-carrier techniques, for example, the Orthogonal Frequency Division Multiplexing (OFDM), the Multi-Carrier CDMA (MC-CDMA), the Multi-Carrier Direct Spread CDMA (MC-DS-CDMA), the Multi-Tone CDMA (MT-CDMA), the Multi-Carrier TDMA (MC-TDMA), the time-frequency two-dimension spreading technique and other spreading techniques based on the above mentioned techniques.

As a representative technique in multi-carrier techniques, the OFDM technique divides a given channel into multiple orthogonal sub-channels in the frequency domain and permits the overlap of partial frequency spectrum of sub-carriers. As long as the orthogonality between sub-carriers is guaranteed, data signals may be separated from the overlapping sub-carriers.

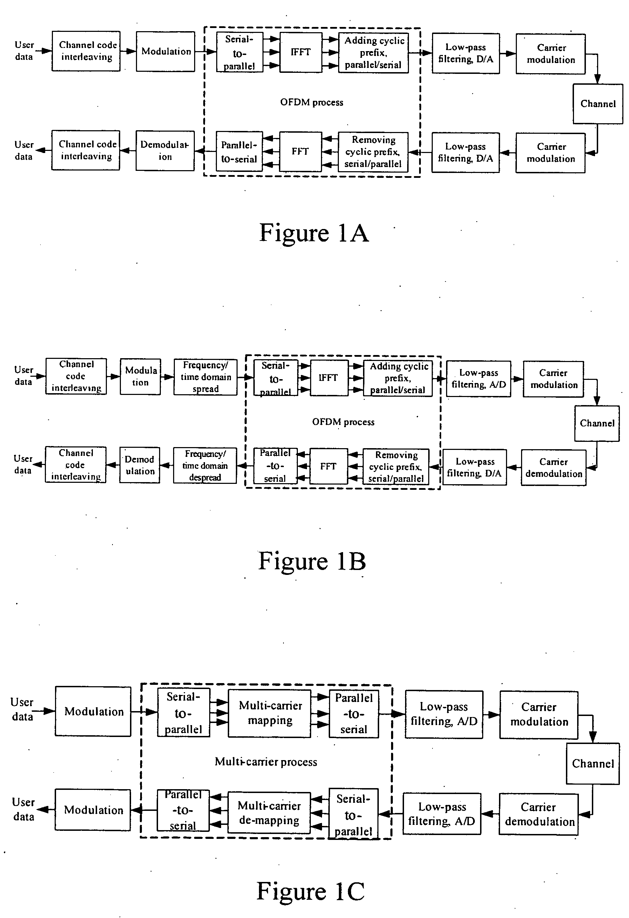

Figure 1A is a simplified schematic diagram illustrating a data transmission process in the OFDM technique. As shown in Figure 1A, the user data are first performed a channel coding and interleaving process and then transformed into symbols through a modulation scheme, e.g., Binary Phase Shift Keying (BPSK) modulation, Quaternary Phase Shift Keying (QPSK) modulation or Quadrature Amplitude Modulation (QAM), finally the symbols are modulated onto radio frequency through OFDM process. In the OFDM process, the symbols are first performed serial-to-parallel conversion to be converted into several low rate data sub-streams, each of which occupies a sub-carrier. The data sub-streams are mapped on the sub-carriers through Inverse Discrete Fourier Transform (IDFT) or Inverse Fast Fourier Transformer (IFFT). Cyclic Prefix (CP) is adopted by the OFDM technique as protection interval, which largely reduces, or even eliminates inter-symbol interference and assures the orthogonality of channels so that the inter-channel interference is greatly reduced.

Since 1993, techniques combining the multi-carrier modulation and the CDMA have been emerging, which are divided into frequency domain spread technique and time domain spread technique in general. Through channel coding, interleaving and modulation, user data are converted into symbols, which are performed the frequency domain spread or the time domain spread before being performed OFDM process. If the symbols are only performed the frequency domain spread, the technique is called MC-CDMA, if the symbols are only performed the time domain spread, the technique is called MC-DS-CDMA, and if the symbols are performed both the frequency domain spread and the time domain spread, the technique is called a multi-carrier technique with time-frequency domain two-dimension spread.

It can be seen from the fore-going description that the multi-carrier mapping is performed through IDFT or IFFT, the spectrums of the sub-carriers are overlapping and orthogonal to one another, and the inter-symbol interference is avoided by means of the cyclic prefix. In the OFDM technique, the out-band attenuation of sub-carrier spectrum may be increased by adding windows, and the cyclic prefix may not be used through certain technical means. The user data transmission in the multi-carrier technique is shown in Figure 1C, in which the user data are modulated first, e.g.,

performed channel coding, interleaving, symbol modulation and time domain and/or frequency domain spread. After the serial-to-parallel conversion, the modulated user data are mapped on multiple orthogonal or non-orthogonal sub-carriers through certain technical means, eventually the user data are performed parallel-to-serial modulation onto radio frequency.

The OFDM technique was first invented in the middle of the 1960's. The OFDM technique, however, was not widely applied for a long time because the development of the OFDM technique was impeded by many difficulties. Firstly, in the OFDM technique, the orthogonality between sub-carriers is required. Although the orthogonality between sub-carriers may be implemented theoretically by means of Fast Fourier Transform (FFT), it is impossible in practical applications to provide a device implementing such complex real time Fourier transform through the technical measures of the day. Secondly, the requirements on the stability of a transmitter oscillator and a receiver oscillator as well as the linearity of a radio frequency power amplifier also prevent the OFDM technique from being applied in practical applications. Since the 1980's, the development of a large scale integrated circuit technique has solved the problem of implementing the FFT. Along with the development of the Data Signal Processor (DSP) technique, the OFDM technique has been turned from the theory into practical application.

The OFDM technique rapidly becomes a study focus due to its inherent strong resistance to delay spread and its high spectrum efficiency, and is adopted by multiple international specifications such as the European Digital Audio Broadcast (DAB), the European Digital Video Broadcast (DVB), the High Performance Local Area Network (HIPERLAN), the Institution of Electrical and Electronics Engineers (IEEE) 802.11 Wireless LAN (WLAN) and the IEEE802.16 wireless Metropolitan Area Network (MAN). The multi-carrier technique was discussed as a dominate access technique at the Radio Access Network (RAN) conference of 3rd Generation Partnership Project (3GPP) held in 2004.

In an OFDM system, as the sub-carriers are orthogonal to one another, the interference between terminals in the same cell is considered to be minimum. In the case of continuous coverage, two terminals taking the same sub-carrier will encounter co-channel interference. A frequency hopping technique may be used to eliminate co-channel interference. A method for achieving frequency hopping in the OFDM technique includes: dividing the frequency spectrum resource into time-frequency grids, and setting each physical channel to correspond to a time-frequency grid. In a cell, the time-frequency grids corresponding to different physical channels are orthogonal to one another, hence interference between different physical channels in the cell is avoided.

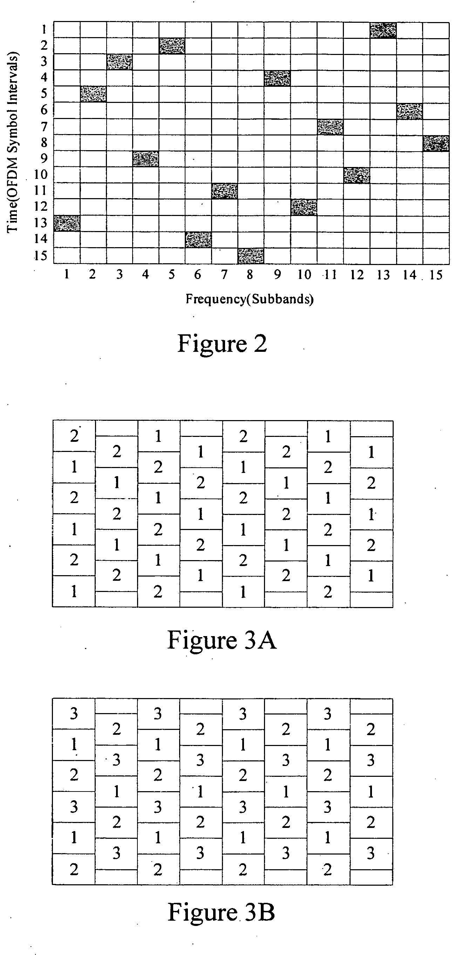

Figure 2 shows a simplified diagram of the basic OFDM time-frequency pattern. As shown in Figure 2, the time-frequency pattern is generated based on a COSTA sequence with the length of 15, and all other time-frequency patterns are obtained by rotating the basic time-frequency pattern in the frequency domain. In the OFDM transmission method provided by the 3GPP, when Parameter Set 2 is adopted, a Transmission Time Interval (TTI) includes 12 OFDM symbols, and two time-frequency patterns thereof are shown herein: $TFP_0$=[13 5 3 9 2 14 11 15 4 12 7 10], $TFP_1$=[14 6 4 10 3 15 12 1 5 13 8 11].

In different cells, the time-frequency pattern adopted in a TTI is rotated at a time offset. Each cell has a unique time offset and, similar to scramble codes in the Wideband Code Division Multiple Access (WCDMA) system, the time offset is revisable in each TTI, therefore even the time-frequency patterns of two cells are identical in a TTI, the patterns will deviate from each other in the next TTI so that the inter-cell interference is averaged and the frequency reuse factor may be 1.

In the frequency-hopping technique, if every terminal is provided 1/3 of the total sub-carriers and the terminals select sub-carriers at random, the probability of a terminal selecting a certain sub-carrier is 1/3, the probability of a certain sub-carrier not being selected by any terminal is (1-1/3)×(1-1/3)×(1-1/3) = 8/27; the probability of a certain sub-carrier being selected by one terminal is $C_3^1 \times 1/3 \times (1-1/3) \times (1-1/3) = 12/27$ ; the probability of a certain sub-carrier being selected by two terminal is $C_3^2 \times 1/3 \times 1/3 \times (1-1/3) = 6/27$ and the probability of a certain sub-carrier being selected by three terminal is 1/3×1/3×1/3=1/27. That means the probability of none co-channel interference is 12/27, the probability of co-channel interference is 1/27+6/27= 7/27 and the probability of resource idling is 8/27. Therefore in random frequency-hopping, different terminals are likely to select the same sub-carrier and cause co-channel interference, or some sub-carriers may idle without any data transmission, which results in resource waste; both situations are disadvantageous concerning effective resource utilization.

Moreover, a US patent application with Application No. 2002/0187811 discloses a wireless communication system including multiple cells with a plurality if sectors, where, a base station communicates with the mobile units contained within the cell and has transmitter for transmitting communication signals along at least two carriers per sector within a cell, each carrier within a sector is assigned an exclusive zone spaced from the base station from an inner zone to an outer zone, and the power per carrier is reduced successively from the outer zone to the inner zone.

## Summary of the Invention

The embodiments of the present invention provide a method, systems and an apparatus for implementing soft frequency reuse in a wireless communication system, according to the subject-matter defined in independent claims 1, 7, 17 and 20.

According to the method, systems and the apparatus provided by the embodiments of the present invention, at the border of the cell or sector, i.e., in an area away from the base station of the cell or sector, a frequency reuse scheme with the frequency reuse factor equal to 3 is used; in an inner zone of the cell or sector, i.e., in an area nearby the base station of the cell or sector, a frequency reuse scheme with the frequency reuse factor equal to 1 is used. Since transmit power is restricted in the inner zone of the cell or sector, an island coverage in which the frequency reuse factor equals to 1 is formed. Setting different frequency reuse factors for different areas of one cell or sector not only avoids interference between adjacent cells or sectors in the case of continuous coverage so as to raise the communication rate at the border of the cell or sector but also adequately uses precious communication resources so as to implement high rate communications. Therefore, the method provided by the embodiments of the present invention may be referred to as a method for implementing soft frequency reuse. The interference between cells or sectors may be eliminated by means of a controllable frequency reuse scheme provided by the embodiments of the present invention, which is favorable to implement resource management strategies and improve the stability of networks.

## Brief Description of the Drawings

Figure 1A is a simplified schematic diagram illustrating a user data transmission process in the OFDM technique.

Figure 1B is a simplified schematic diagram illustrating a user data transmission process in the frequency/time spread technique.

Figure 1C is a simplified schematic diagram illustrating a user data transmission process in the multi-carrier technique.

Figure 2 shows a simplified diagram of the basic OFDM time-frequency pattern.

Figure 3A is a simplified schematic diagram illustrating the frequency reuse pattern with a frequency reuse factor equal to 2.

Figure 3B is a simplified schematic diagram illustrating the frequency reuse pattern with a frequency reuse factor equal to 3.

Figure 3C is a simplified schematic diagram illustrating the frequency reuse pattern with a frequency reuse factor equal to 4.

Figure 3D is a simplified schematic diagram illustrating the frequency reuse pattern with a frequency reuse factor equal to 5.

Figure 3E is a simplified schematic diagram illustrating the frequency reuse pattern with a frequency reuse factor equal to 6.

Figure 3F is a simplified schematic diagram illustrating the frequency reuse pattern with a frequency reuse factor equal to 7.

Figure 4 is a simplified schematic diagram illustrating the networking in which sub-carrier reuse is employed.

Figure 5A is a simplified curve diagram illustrating the trend that the Signal to Interference Ratio (SIR) at the border of a cell changes with the frequency reuse factor in a sub-carrier reuse scheme.

Figure 5B is a simplified curve diagram illustrating the trend that the channel capacity at the border of a cell changes with the frequency reuse factor in a sub-carrier reuse scheme.

Figure 6 is a simplified schematic diagram illustrating the networking using a soft frequency reuse scheme according to an embodiment of the present invention.

Figure 7 is a simplified schematic diagram illustrating the channel capacity in a soft frequency reuse scheme according to an embodiment of the present invention.

Figure 8 is a simplified schematic diagram illustrating an apparatus for implementing soft frequency reuse according to an embodiment of the present invention.

## Detailed Description of the Invention

The embodiments of the present invention are further described in detail hereinafter with reference to the accompanying drawings.

In a random frequency hopping technique, on one hand, different terminals may select the same sub-carrier, which causes co-channel interference, and on the other hand, some sub-carriers may be idle without data transmission, which results in resource waste. However, when the frequency reuse factor is 3, 1/3 of the sub-carriers shall be allocated to every terminal and no co-channel interference shall thus emerge, as a result, all of the sub-carriers are utilized without collision. Therefore a technical scheme in which the frequency reuse factor is 3 is much more advantageous than the technical scheme which adopts the frequency hopping technique, i.e., in which the frequency reuse factor is 1.

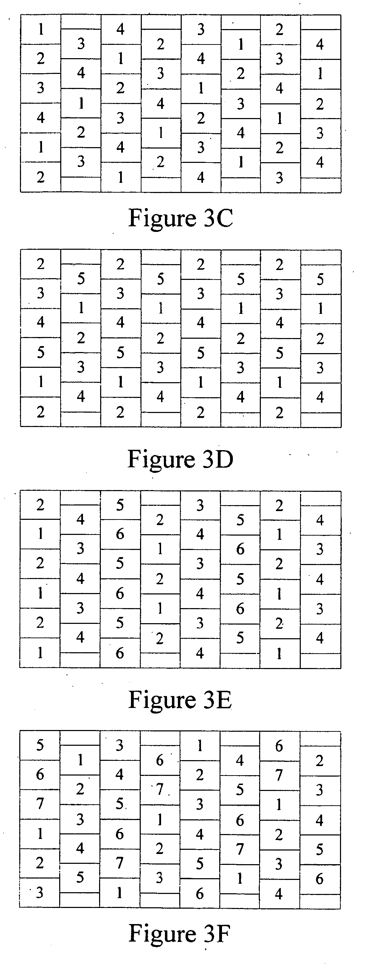

In the 1970's, the Bell Laboratories set forth the cellular concept. Owing to the propagation fading of radio waves, one carrier frequency may be reused beyond a certain distance. Thus, compared with the macro-cell networking technique, the cellular technique has higher spectrum efficiency. Figures 3A to 3F are simplified schematic diagrams illustrating frequency reuse pattern in which the frequency reuse factor ranges from 2 to 7.

In the first generation mobile communication system Frequency Division Multiple Access (FDMA) and the second generation mobile communication system TDMA, 7, 9 or 11 is usually selected as the frequency reuse factor to eliminate the co-channel interference. In the CDMA technique, the frequency reuse factor 1 is adopted, the same carrier frequency is used in all cells, and different scramble codes are set to distinguish one cell from another. In this way, complex frequency planning is not needed, and it is easy to implement soft switching and improve the spectrum efficiency. Therefore, the frequency reuse factor being set as 1 is regarded as a great advantage of the CDMA technique. Multi-carrier technique and the CDMA technique have different features, and the networking technique and frequency planning in the multi-carrier wireless communication system are highlighted by researchers at present.

In a cellular communication system, the Signal to Interference Ratio (SIR) of a receiver may be expressed as the following: $SIR = \dfrac{P_{rx}}{P_{\text{int}ra-cell} + P_{\text{int}er-cell} + P_n}$, in *which $P_{rx}$* represents the receive power of available signals,

$P_{\text{int}ra\text{-}cell}$ represents the intra-cell interference power, $P_{\text{int}er\text{-}cell}$ represents the inter-cell interference power and $P_n$ represents thermal noise power.

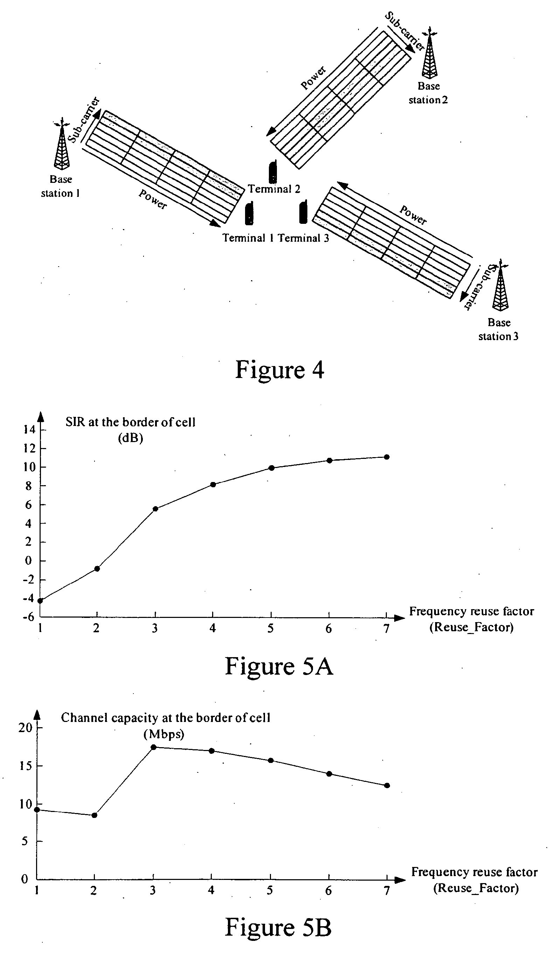

In the multi-carrier wireless communication system, frequency reuse may be achieved by implementing carrier frequency reuse and sub-carrier reuse. The carrier frequency reuse allows different carrier frequencies to be adopted by different cells, and each cell uses all of the sub-carriers. The sub-carrier reuse allows a carrier frequency to be adopted by different cells, and each cell uses different sub-carriers. Carrier-frequency reuse scheme is identical with conventional frequency reuse scheme in a single carrier system, in which a terminal needs to shift to another carrier frequency when the terminal switches to another cell, i.e., only hard switching is available. However, in the sub-carrier reuse scheme, different cells adopt the same carrier frequency with different sub-carriers, as shown in Figure 4, therefore the terminal need not shift to another carrier frequency while switching to another cell and soft switching is thus achieved. In such way a cellular network may be constructed with only one carrier frequency, though the terminals in the cellular network are required to have higher broadband performance than those in carrier frequency reuse scheme.

If the carrier frequency width is *W* and the frequency reuse factor is *reuse_factor* in a multi-carrier wireless communication system, intra-cell multiple access interference may be eliminated by means of receive algorithms, i.e., $P_{\text{int}ra\text{-}cell}$ may be equal to 0 and every cell occupies 1/*reuse_factor* of the total carrier frequency width, to which the thermal noise decreases in proportion. As a result, the SIR of the receiver may be expressed as

$$SIR = \dfrac{P_{rx}}{P_{\text{int}er-cell} + P_n}.$$

If the channel is a flat fading channel, the maximal error-free transmission rate in a cell, according to the Shannon channel capacity formula, may be expressed as the following: $C = \dfrac{W}{reuse\_factor} \cdot \log_2(1 + SIR)$.

In different frequency planning schemes, if terminals are located at the cross point of three cells, as shown in Figure 4, Radio Frequency (RF) parameters shown in Table 1 and the above formula may be used to obtain the trend that the SIR and the channel capacity at the border of cell change with the frequency reuse factor, and computing results are as shown in Figure 5A and 5B.

Table 1

| RF parameter | value | Symbol |
|---|---|---|
| Carrier frequency width W (MHz) | 20 | A |
| Thermal noise density (dBm/Hz) | -174 | B |
| Noise Coefficient of receiver (db) | 5 | C |
| Thermal noise power $P_n$ (dBm) | -96 | D=10*lgA+B+C |
| Transmit Power of base station (dBm) | 45 | E |
| Cell radius (Km) | 1 | F |
| Path loss (dB) | 137.3 | G=137.3+35.2*lg(F) |

Figure 5A is a simplified curve diagram illustrating the trend that the Signal to Interference Ratio (SIR) at the border of a cell changes with the frequency reuse factor in a sub-carrier reuse scheme and Figure 5B is a simplified curve diagram illustrating the trend that the channel capacity at the border of a cell changes with the frequency reuse factor in a sub-carrier reuse scheme. As shown in Figure 5A and 5B, the channel capacity at the border of the cell in the case that the frequency reuse factor is equal to 1 are almost the same as that in the case that the frequency reuse factor is equal to 2. The channel capacity at the border of the cell is the maximum in the case that the frequency reuse factor is equal to 3, and then the channel capacity at the border of the cell gradually decreases along with the increase of the frequency reuse factor. It may be thus included that 3 is an ideal frequency reuse factor at the border of the cell. In addition, several problems need to be described in accordance with Figure 5A and 5B.

1. The smaller the frequency reuse factor is, the wider the bandwidth available to each cell is, and the more serious the co-channel interference is, and the lower the SIR is; vice versa, the greater the frequency reuse factor is, the narrower the bandwidth available to each cell is, and the lighter the co-channel interference is, and the higher the SIR is.

2. When the frequency reuse factor is equal to 1 or 2, since co-frequency adjacent cells may exist, the co-channel interference will be serious and the SIR will be as low as -4.4dB and -1.1dB as shown in Figure 5A, which results in smaller channel capacity at the border of the cell, i.e., channel capacity as low as 8Mbps to 9Mbps.

3. When the frequency reuse factor is 3, the interference of the co-frequency adjacent cells is eliminated, so the SIR increases significantly, e.g., the SIR is equal to 5.89dB as shown in Figure 5A. Although only 1/3 of total bandwidth is utilized at the border of the cell, the increase of the SIR may compensate the losses caused by the decreasing of bandwidth. As shown in Figure 5B, the channel capacity increases by nearly 100% to 15Mbps.

4. When the frequency reuse factor continuously increases, the co-channel interference continuously decreases and the SIR continuously increases. When the frequency reuse factor is equal to 7, the SIR reaches 11dB. Since the channel capacity and the SIR comply with logarithmic relation, the increase of the channel capacity acquired through the increase of the SIR is unable to compensate the losses caused by the decreasing of bandwidth. Therefore, the channel capacity presents a descending trend as a whole.

5. In the formula $SIR = \dfrac{P_{rx}}{P_{inter-cell} + \dfrac{P_n}{reuse\_factor}}$, the intra-cell multiple access interference is eliminated by means of receive algorithms or other measures, i.e., the receiver noise mainly includes the co-channel interference and the thermal noise. Since the intra-cell interference is a main noise component in the conventional CDMA communication system adopting RAKE receiver techniques, the most suitable frequency reuse scheme adopts 1 as the frequency reuse factor.

6. If the frequency reuse factor increases beyond 3, the channel capacity at the border of the cell just decreases a little and is still higher than the channel capacity in the case that the frequency reuse factor is equal to 1 or 2. However, when the frequency reuse factor reaches a large number, e.g., 7, the SIR of the receiver may reach 11dB. Though the SIR increases because of the decrease of the co-channel interference, the receive power of the receiver does not increase, which means that the anti-interference capability of the receiver is poor. Such factors as the interference of environments around the receiver, the residual interference in the cell caused by demodulation algorithms or the adjacent channel interference noise will greatly reduce the SIR and the channel capacity. As a result, the channel capacity at the border of the cell presents a descending trend when the frequency reuse factor is greater than 3.

The channel capacity at the border of the cell is increased and the inter-cell interference is avoided by using the frequency reuse at the border of the cell. The border of the cell is an area with the severest interference in the cell, but the terminal may be located at the center of the cell and be near a base station in practical operations. If the terminal is close to the base station, the signal power from the cell is high and the interference from adjacent cells is low, which makes it possible to acquire a higher SIR. In this way, the frequency of adjacent cells may be used at the center of the cell, thereby implementing the high rate communications.

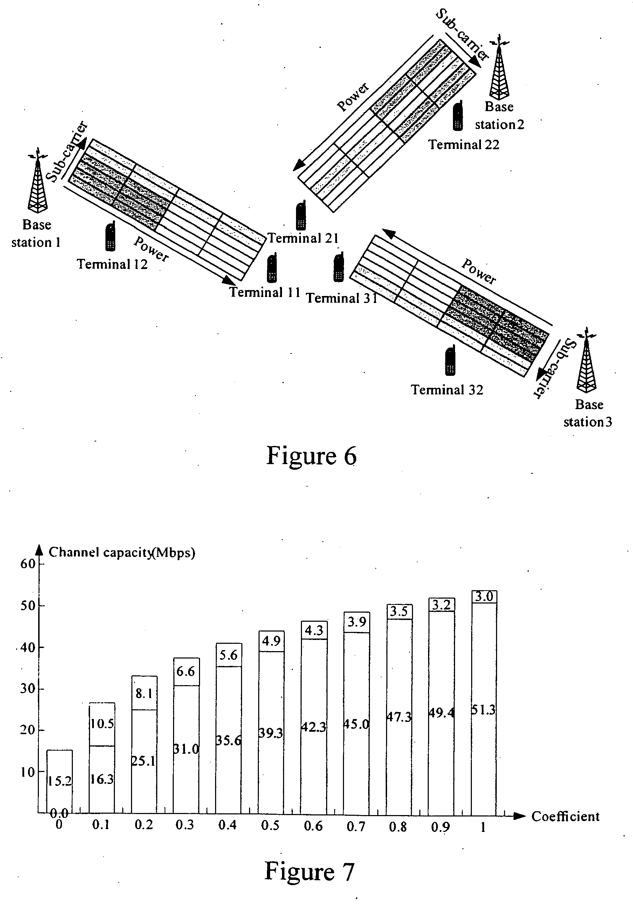

Figure 6 is a simplified schematic diagram illustrating the networking using a soft frequency reuse scheme according to an embodiment of the present invention. In Figure 6, Base station 1 manages Terminal 11 and Terminal 12, Terminal 11 is located in an inner zone of the area managed by Base station 1, for example, 30% of the radius of the cell taking Base station 1 as the center, and Terminal 12 is located at the border of the area managed by Base station 1, for example, 90% of the radius of the cell taking Base station 1 as the center. Base station 2 manages Terminal 21 and Terminal 22, Terminal 21 is located in an inner zone of the area managed by Base station 2, for example, 20% of the radius of the cell taking Base station 2 as the center, and Terminal 22 is located at the border of the area managed by Base station 2, for example, 85% of the radius of the cell taking Base station 2 as the center. Base station 3 manages Terminal 31 and Terminal 32, Terminal 31 is located in an inner zone of the area managed by Base station 3, for example, 50% of the radius of the cell taking Base station 3 as the center, and Terminal 32 is located at the border of the area managed by Base station 3, for example, 95% of the radius of the cell taking Base station 3 as the center. In an embodiment of the present invention, different sub-carriers of different frequencies are allocated to terminals at the border of the cell, which may avoid or reduce the co-channel interference, and improve the communication rate at the border of the cell. The terminal in the inner zone of the cell may reduce the interference with the adjacent cells by limiting the transmit power and utilize the bandwidth adequately to improve the communication rate.

As can be seen from the above description, according to the embodiments of the present invention, at the border of a cell, i.e., in the area away from the base station of the cell, a frequency reuse scheme with the frequency reuse factor equal to 3 is used, and in the inner zone of the cell, i.e., in the area near the base station of the cell, a frequency reuse scheme with the frequency reuse factor equal to 1 is used. Since the transmit power is restricted in the inner zone of the cell, island coverage in which the frequency reuse factor equals to 1 is formed. Setting different frequency reuse factors for different areas of one cell not only avoid the interference between adjacent cells in the case of continuous coverage so as to improve the communication rate at the border of the cell but also adequately utilize precious communication resources so as to implement high rate communications.

In the embodiments of the present invention, all sub-carriers are divided into N sub-carrier groups, and each cell selects one sub-carrier group as its primary sub-carrier and other sub-carrier groups as its secondary sub-carriers. Different transmit power thresholds are set for the primary sub-carrier and the secondary sub-carriers of each cell, and the transmit power corresponding to each sub-carrier is unable to exceed the transmit power threshold set for the sub-carrier. For example, the transmit power threshold of the primary sub-carrier is set as higher than the transmit power threshold of the secondary sub-carriers. The border of the cell is determined through the coverage area of the transmit power threshold of the primary sub-carrier. The terminal in the inner zone of the cell uses the secondary sub-carriers and the terminal at the border of the cell uses the primary sub-carrier. In this way, the interference at the borders of adjacent cells may be decreased greatly.

In addition, the divided sub-carrier groups and the selected primary sub-carrier and secondary sub-carriers may be fixed, or the sub-carrier groups and the primary sub-carrier and the secondary sub-carriers may change dynamically based on time as long as the same sub-carrier is not used synchronously at adjacent cells. For example, there are six sub-carriers identified as l, 2, 3, 4, 5 and 6 respectively, sub-carriers identified as 1 and 2 are placed into one sub-carrier group, the sub-carriers identified as 3 and 5 are placed into one sub-carrier group, the sub-carrier identified as 4 is placed into one sub-carrier group and the sub-carrier identified as 6 is placed into one sub-carrier group. Cell 1 selects the sub-carrier group including the sub-carriers identified as 1 and 2 as its primary sub-carrier and other sub-carrier groups as its secondary sub-carriers, and the adjacent Cell 2 selects the sub-carrier group including the sub-carrier identified as 4 as its primary sub-carrier and other sub-carrier groups as its secondary sub-carriers. After a period of time, the six sub-carrier groups may be regrouped, the sub-carriers identified as 2 and 5 are placed into one sub-carrier group, the sub-carriers identified as 4 and 6 are placed into one sub-carrier group, the sub-carrier identified as 1 is placed into one sub-carrier group and the sub-carrier identified as 3 is placed into one sub-carrier group. Cell 1 selects the sub-carrier group including the sub-carriers identified as 4 and 6 as its primary sub-carrier and other sub-carrier groups as its secondary sub-carriers, and the adjacent Cell 2 selects the sub-carrier group including the sub-carrier identified as 3 as its primary sub-carrier and other sub-carrier groups as its secondary sub-carriers.

If macro problems like system capacity and spectrum efficiency are considered, the typical value of N is 3 to keep the system capacity and the spectrum efficiency both at the maximum. Other values are also be assigned to N, e.g., 4, 5, 6, 7 or 8, etc..

A full coverage type channel, such as a broadcast channel and public control channel, may be set to use the primary sub-carrier of the cell only and adopt comparatively higher transmit power. Although the coverage area of adjacent cells overlaps partially each other, the interference between adjacent cells is comparatively lower, which is favorable for terminals to select cell, handover and accurately receive public control information.

In the embodiments of the present invention, the primary sub-carrier may be used to bear signalings to guarantee the reliability of the signalings.

The service channel may be set to only use the primary sub-carrier when a terminal is located at the border of the cell. Since the primary sub-carriers of adjacent cells do not overlap each other, it is possible to reduce the interference between adjacent cells and improve the communication quality.

The primary sub-carrier and the secondary sub-carriers may be used simultaneously when the terminal is close to the base station, so as to transmit data and multimedia services at a high rate. Since the transmit power of the secondary sub-carriers are relatively lower, the interference with the adjacent cells is reduced and the spectrum efficiency is improved. The distance between the terminal and the base station may be predefined, e.g., 75% of the coverage area of the cell. If the distance is within the predefined distance, it is regarded that the terminal is close to the base station.

As shown in Figure 6, if Terminal 11, 21 and 31 are located at the border of their respective cells, while Terminal 12, 22 and 32 are located in the inner zone of their respective cells, e.g., less than or equal to 1/2 radius of their respective cells taking base stations as center. The transmit power used by the terminals in the inner zone of the cell is less than that used by the terminals at the border of the cell. Figure 7 is a simplified schematic diagram illustrating the channel capacity in a soft frequency reuse scheme according to an embodiment of the present invention. In Figure 7, the coefficient shown by the horizontal axis is the ratio of the transmit power used by the terminals in the inner zone of the cell to that used by the terminals at the border of the cell. The gray blocks represent the channel capacity in the inner zone of the cell and the white blocks represent the channel capacity at the border of the cell. It can be seen from Figure 7 that:

1. When the coefficient is equal to 0, the channel capacity is equivalent to the channel capacity at the border of the cell in the case that the frequency reuse factor is equal to 3, which is equal to 15.2Mbps.

2. When the coefficient gradually increases, i.e., the transmit power used by the terminals in the inner zone of the cell gradually increases, the channel capacity in the inner zone of the cell gradually increases, the channel capacity at the border of the cell gradually decreases, and the channel throughput of the cell increases.

3. When the coefficient is up to 1, the channel capacity at the border of the cell decreases to 2.96Mbps, just equal to 1/3 of channel capacity in the case that the frequency reuse factor is equal to 1, because only 1/3 of the total bandwidth is utilized at the border of the cell while the interference remains the same as the inference in the co-frequency reuse scheme.

It can thus be concluded that when the ratio between the transmit power thresholds of the secondary sub-carriers and the transmit power threshold of the primary sub-carrier moves from 0 to 1, the frequency reuse factor also moves smoothly from 3 to 1, so the method provided by the embodiments of the present invention may be called a soft frequency reuse scheme. The multi-carrier wireless communication system in which soft frequency reuse scheme is adopted may distribute power appropriately based on the network conditions, which, together with adaptive link techniques, leads to the most optimized system throughput and performance.

In the fore-going description, the inner zone of the cell may be the area whose center is the base station and radius is not greater than 50% of the radius of the cell, and the rest area of the cell may be taken as the border of the cell. The inner zone of the cell may also be the area whose center is the base station and radius is not greater than 60% of the radius of the cell, and the rest area of the cell may be taken as the border of the cell. The inner zone of the cell may also be the area whose center is the base station and radius is not greater than 35% of the radius of the cell, and the rest area of the cell may be taken as the border of the cell.

Furthermore, the ratio between the transmit power thresholds of the secondary sub-carriers and the transmit power threshold of the primary sub-carrier may be adjusted dynamically, e.g., when it is determined that the proportion between the traffic at the border of the cell and the total traffic of the cell or sector is increasing, the ratio between the transmit power thresholds of the secondary sub-carriers and the transmit power threshold of the primary sub-carrier shall be reduced; and when it is determined that the proportion between the traffic at the border of the cell and the total traffic of the cell or sector is decreasing, the ratio between the transmit power thresholds of the secondary sub-carriers and the transmit power threshold of the primary sub-carrier shall be increased. In such way the spectrum resource may be fully utilized.

It should be noted that, though the fore-going description explains embodiments in cells, the embodiments of the present invention are also applicable to sectors.

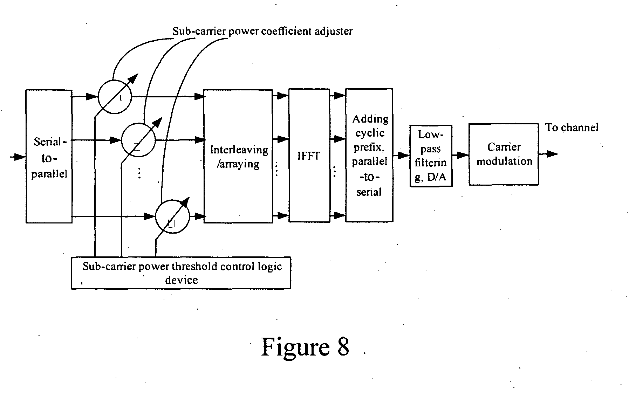

The embodiments of the present invention also provide an apparatus for implementing the soft frequency reuse scheme by making the transmit power of the sub-carrier controllable and adjustable and dividing all sub-carriers into the primary sub-carrier group and the secondary sub-carrier groups. As shown in Figure 8, the apparatus includes:

a serial-to-parallel converter, for converting data entered in serial into multiple parallel data streams and exporting the parallel data streams;

a sub-carrier power coefficient adjuster, for multiplying the parallel data streams by a power coefficient before the parallel data streams are received by an inverse Fourier transformer, herein the power coefficient is used for adjusting the power of the sub-carriers on which the data streams are mapped;

a sub-carrier power threshold control logic device, for controlling the threshold of the power coefficient by which each sub-carrier is multiplied, and to be specific, for providing a threshold for the power coefficient of each sub-carrier and limiting the variation of the power coefficient thereby in the threshold to divide all sub-carriers into a primary sub-carrier group with high power and secondary sub-carrier groups with low power;

an inverse Fourier transformer, for receiving the parallel data streams, performing inverse Fourier transform and mapping the data streams on multiple corresponding sub-carriers;

a parallel-to-serial converter, for receiving the sub-carriers exported by the inverse Fourier transformer, converting the multiple sub-carriers into one data stream and exporting the data stream.

As shown in Figure 8, the apparatus may further includes: an interleave/array unit, for arraying the data streams to be received by the inverse Fourier transformer in an interleaving manner, and a cyclic prefix adding unit, for adding a cyclic prefix into every sub-carrier to be converted by the parallel-to-serial converter.

The fore-going description is based on multi-carrier wireless communication system, however, the method provided by the embodiments of the present invention for implementing soft frequency reuse is also applicable to any wireless communication system, e.g., a simple carrier wireless communication system, in which a cell may adopt multiple frequencies, i.e., multiple carriers which may be divided into several carrier groups, and a carrier group may be set as the primary carrier group and the rest carrier groups may be set as the secondary carrier groups, thus soft frequency reuse is achieved. It should be further noted that each carrier group does not overlap one another.

The foregoing is only preferred embodiments of the present invention and is not for use in limiting the protection scope thereof.

### Claims

**1.** A method for implementing soft frequency reuse in a wireless communication system **characterised by** comprising:

dividing all carriers available for the soft frequency reuse in the wireless communication system into multiple groups;

for each cell or sector, selecting at least one group of carriers as a set of primary carrier, selecting the other groups of carriers as a set of secondary carrier, setting a first transmit power threshold for the set of primary carrier, and setting a second transmit power threshold for the set of secondary carrier wherein the first transmit power threshold is higher than the second transmit power threshold;

wherein, the two sets of primary carrier selected for any two adjacent cells or sectors are non-overlapped.

**2.** The method of Claim I, wherein, all the carriers available for the soft frequency reuse in the wireless communication system are divided into multiple groups in a dynamical way or a static way.

**3.** The method of Claim 1, wherein all the carriers are divided into three groups, one of the three groups is selected as the set of primary carrier, and the other two groups are selected as the set of secondary carrier.

**4.** The method of Claim 1, wherein the transmit power of the primary carrier is not higher than the first transmit power threshold set for the primary carrier; and
the transmit power of the secondary carrier is not higher than the second transmit power threshold set for the secondary carrier.

**5.** The method of Claim 1, wherein, for each cell or sector,
the set of primary carrier is used in the whole cell or sector,
the set of secondary carrier is used in an inner zone of the cell or sector,
the transmit power of one carrier of the set of primary carrier is not higher than the first transmit power threshold, and
the transmit power of one carrier of the set of secondary carrier is not higher than the second transmit power threshold.

**6.** The method of Claim 5, wherein the inner zone of the cell or sector is an area of which radius is 20%, 30% or 50% of the radius of the cell or sector taking a base station managing the cell or sector as the center.

**7.** The method of Claim 1, wherein the wireless communication system is a multi-carrier wireless communication system, and the set of primary carrier and the set of secondary carrier are sub-carriers in the multi-carrier wireless communication system.

**8.** The method of Claim 7, wherein, the set of primary sub-carrier is used by a full coverage type channel in the cell or sector.

**9.** The method of Claim 7, wherein, the set of primary sub-carrier is used to bear signaling.

**10.** The method of Claim 7, wherein, the set of primary sub-carrier is used by a service channel in a border area.

**11.** The method of Claim 7, wherein the multi-carrier wireless communication system is any of the followings:

an Orthogonal Frequency Division Multiple Access, OFDMA, system,
a Single Carrier Frequency Division Multiple Access, SC-FDMA, system,
a Multi-Carrier Code Division Multiple Access, MC-CDMA, system,
a Multi-Carrier Direct Spread Code Division Multiple Access, MC-DS-CDMA, system,
a Multi-Tone Code Division Multiple Access, MT-CDMA, system,
a Multi-Carrier Time Division Multiple Access, MC-TDMA, system, and
a time-frequency two-dimension spreading multi-carrier wireless communication system.

**12.** The method of Claim 1, further comprising:

adjusting the ratio of the second transmit power threshold set for the secondary carrier to the first transmit power threshold set for the primary carrier dynamically.

**13.** The method of Claim 12, wherein the adjusting the ratio dynamically comprises:

reducing the ratio of the second transmit power threshold to the first transmit power threshold of the adjacent cell or sector if a proportion of traffic in a border area of the cell or sector to a total traffic of the cell or sector increases; and
increasing the ratio of the second transmit power threshold to the first transmit power threshold of the adjacent cell or sector if the proportion of the traffic in the border area of the cell or sector to the total traffic of the cell or sector decreases.

**14.** An apparatus for implementing the method of Claim 1, comprising:

a serial-to-parallel converter, configured to convert a data entered in serial into multiple parallel data sub-streams and export the data sub-streams;

an inverse Fourier transformer, configured to perform inverse Fourier transform for the data sub-streams, and map the data sub-streams onto multiple carriers, respectively;

a parallel-to-serial converter, configured to convert the multiple carriers into one data stream and export the data stream;

an adjuster, configured to multiply the parallel data sub-streams exported by the serial-to-parallel converter by a power coefficient respectively; the power coefficient is used for adjusting transmit power of each carrier; and

a control device, configured to control the power coefficient of each carrier to limit the transmit power of each primary carrier to the first transmit power threshold and limit the transmit power of each secondary carrier to the second transmit power threshold.

15. The apparatus of Claim 14, wherein

the control device is configured to adjust the ratio of the second transmit power threshold to the first transmit power threshold dynamically.

16. The apparatus of Claim 15, wherein the control device is configured to adjust the ratio of the second transmit power threshold to the first transmit power threshold dynamically according to the method of Claim 13

17. A system for implementing the method of Claim 1, comprising multiple cells or sectors, each cell or sector having a base station and multiple terminals communicating with the base station; wherein, in each cell or sector,

the base station is configured with the set of primary carrier, the set of secondary carrier, the first transmit power threshold, and the second transmit power threshold.

18. The system of Claim 17, the base station comprising the apparatus of any of Claims 14-16.

19. The system of Claim 17 or 18, wherein, in each cell or sector,

the terminal in a border area is allocated with the set of primary carrier, and

the terminal in an inner zone is allocated with the sets of secondary carrier and/or primary carrier.

20. A system for implementing soft frequency reuse in a wireless communication system **characterised by** comprising:

a means for dividing all carriers available for the soft frequency reuse in the wireless communication system into multiple groups, for each cell or sector, selecting at least one group of carriers as a set of primary carrier, and selecting the other groups of carriers as a set of secondary carrier, wherein, the two sets of primary carrier selected for any two adjacent cells or sectors are non-overlapped; and

a means for setting a first transmit power threshold for the set of primary carrier, and setting a second transmit power threshold for the set of secondary carrier, wherein the first transmit power threshold is higher than the second transmit power threshold.

**Patentansprüche**

1. Verfahren zum Implementieren von Soft-Frequenzwiederverwendung in einem drahtlosen Kommunikationssystem, **gekennzeichnet durch** die folgenden Schritte:

Aufteilen aller für die Soft-Frequenzwiederverwendung in dem drahtlosen Kommunikationssystem verfügbaren Träger in mehrere Gruppen;

für jede Zelle oder jeden Sektor: Auswählen mindestens einer Gruppe von Trägern als eine Primärträgermenge, Auswählen der anderen Gruppen von Trägern als eine Sekundärträgermenge, Setzen einer ersten Sendeleistungsschwelle für die Primärträgermenge und Setzen einer zweiten Sendeleistungsschwelle für die Sekundärträgermenge, wobei die erste Sendeleistungsschwelle höher als die zweite Sendeleistungsschwelle ist;

wobei die zwei Primärträgermengen, die für zwei beliebige angrenzende Zellen oder Sektoren ausgewählt werden, nicht überlappt sind.

2. Verfahren nach Anspruch 1, wobei alle für die Soft-Frequenzwiederverwendung in dem drahtlosen Kommunikationssystem verfügbaren Träger auf dynamische Weise oder statische Weise in mehrere Gruppen aufgeteilt werden.

3. Verfahren nach Anspruch 1, wobei alle Träger in drei Gruppen aufgeteilt werden, eine der drei Gruppen als die Primärträgermenge ausgewählt wird und die zwei anderen Gruppen als die Sekundärträgermenge ausgewählt werden.

4. Verfahren nach Anspruch 1, wobei die Sendeleistung des Primärträgers nicht höher als die für den Primärträger gesetzte erste Sendeleistungsschwelle ist; und
die Sendeleistung des Sekundärträgers nicht höher als die für den Sekundärträger gesetzte zweite Sendeleistungsschwelle ist.

5. Verfahren nach Anspruch 1, wobei für jede Zelle oder jeden Sektor:

die Primärträgermenge in der gesamten Zelle oder dem gesamten Sektor verwendet wird,
die Sekundärträgermenge in einer inneren Zone der Zelle oder des Sektors verwendet wird,
die Sendeleistung eines Trägers der Primärträgermenge nicht höher als die erste Sendeleistungsschwelle ist und
die Sendeleistung eines Trägers der Sekundärträgermenge nicht höher als die zweite Sendeleistungsschwelle ist.

6. Verfahren nach Anspruch 5, wobei die innere Zone der Zelle oder des Sektors ein Gebiet ist, dessen Radius 20%, 30% oder 50% des Radius der Zelle oder des Sektors beträgt, wobei eine die Zelle oder den Sektor verwaltende Basisstation als die Mitte genommen wird.

7. Verfahren nach Anspruch 1, wobei das drahtlose Kommunikationssystem ein drahtloses Mehrträger-Kommunikationssystem ist und die Primärträgermenge und die Sekundärträgermenge Hilfsträger in dem drahtlosen Mehrträger-Kommunikationssystem sind.

8. Verfahren nach Anspruch 7, wobei die Primärhilfsträgermenge von einem Kanal des Vollabdeckungstyps in der Zelle oder dem Sektor verwendet wird.

9. Verfahren nach Anspruch 7, wobei die Primärhilfsträgermenge verwendet wird, um Signalisierung zu führen.

10. Verfahren nach Anspruch 7, wobei die Primärhilfsträgermenge von einem Dienstkanal in einem Grenzgebiet verwendet wird.

11. Verfahren nach Anspruch 7, wobei das drahtlose Mehrträger-Kommunikationssystem ein Beliebiges der Folgenden ist:

ein System mit Orthogonal-Frequenzmultiplex-Mehrfachzugang OFDMA,
ein System mit Einträger-Frequenzmultiplex-Mehrfachzugang SC-FDMA,
ein System mit Mehrträger-Codemultiplex-Mehrfachzugang MC-CDMA,
ein System mit Mehrträger-Direktspreiz-Codemultiplex-Mehrfachzugang MC-DS-CDMA,
ein System mit Mehrton-Codemultiplex-Mehrfachzugang MT-CDMA,
ein System mit Mehrträger-Zeitmultiplex-Mehrfachzugang MC-TDMA und
ein drahtloses Zeit-Frequenz-Zweidimension-Spreiz-Mehrträger-Kommunikationssystem.

12. Verfahren nach Anspruch 1, ferner mit dem folgenden Schritt:

dynamisches Einstellen des Verhältnisses der für den Sekundärträger gesetzten zweiten Sendeleistungsschwelle zu der für den Primärträger gesetzten ersten Sendeleistungsschwelle.

13. Verfahren nach Anspruch 12, wobei das dynamische Einstellen des Verhältnisses Folgendes umfasst:

Verringern des Verhältnisses der zweiten Sendeleistungsschwelle zu der ersten Sendeleistungsschwelle der angrenzenden Zelle oder des angrenzenden Sektors,
wenn ein Anteil von Verkehr in einem Grenzgebiet der Zelle oder des Sektors an einem Gesamtverkehr der Zelle oder des Sektors zunimmt; und
Vergrößern des Verhältnisses der zweiten Sendeleistungsschwelle zu der ersten Sendeleistungsschwelle der angrenzenden Zelle oder des angrenzenden Sektors,
wenn der Anteil des Verkehrs in dem Grenzgebiet der Zelle oder des Sektors an dem Gesamtverkehr der Zelle oder des Sektors abnimmt.

**14.** Vorrichtung zum Implementieren des Verfahrens von Anspruch 1, umfassend:

einen seriell-parallel-Umsetzer, der dafür ausgelegt ist, seriell eingegebene Daten in mehrere parallele Datensubströme umzusetzen und die Datensubströme zu exportieren;
einen Fourier-Rücktransformierer, der dafür ausgelegt ist, Fourier-Rücktransformation für die Datensubströme auszuführen und die Datensubströme jeweils auf mehrere Träger abzubilden;
einen parallel-seriell-Umsetzer, der dafür ausgelegt ist, die mehreren Träger in einen Datenstrom umzusetzen und den Datenstrom zu exportieren;
einen Justierer, der dafür ausgelegt ist, die durch den seriell-parallel-Umsetzer exportierten parallelen Datensubströme jeweils mit einem Leistungskoeffizienten zu multiplizieren; wobei der Leistungskoeffizient zur Einstellung der Sendeleistung jedes Trägers verwendet wird; und
eine Steuereinrichtung, die dafür ausgelegt ist, den Leistungskoeffizienten jedes Trägers zu steuern, um die Sendeleistung jedes Primärträgers auf die erste Sendeleistungsschwelle zu begrenzen und die Sendeleistung jedes Sekundärträgers auf die zweite Sendeleistungsschwelle zu begrenzen.

**15.** Vorrichtung nach Anspruch 14, wobei
die Steuereinrichtung dafür ausgelegt ist, das Verhältnis der zweiten Sendeleistungsschwelle zu der ersten Sendeleistungsschwelle dynamisch einzustellen.

**16.** Vorrichtung nach Anspruch 15, wobei die Steuereinrichtung dafür ausgelegt ist, das Verhältnis der zweiten Sendeleistungsschwelle zu der ersten Sendeleistungsschwelle dynamisch nach dem Verfahren von Anspruch 13 einzustellen.

**17.** System zum Implementieren des Verfahrens nach Anspruch 1, das mehrere Zellen oder Sektoren umfasst, wobei jede Zelle oder jeder Sektor eine Basisstation und mehrere mit der Basisstation kommunizierende Endgeräte aufweist; wobei in jeder Zelle oder in jedem Sektor
die Basisstation mit der Primärträgermenge, der Sekundärträgermenge, der ersten Sendeleistungsschwelle und der zweiten Sendeleistungsschwelle ausgelegt ist.

**18.** System nach Anspruch 17, wobei die Basisstation die Vorrichtung nach einem der Ansprüche 14-16 umfasst.

**19.** System nach Anspruch 17 oder 18, wobei in jeder Zelle oder in jedem Sektor:

das Endgerät in einem Grenzgebiet die Primärträgermenge zugeteilt bekommt und
das Endgerät in einer inneren Zone die Sekundärträger- und/oder Primärträgermenge zugeteilt bekommt.

**20.** System zum Implementieren von Soft-Frequenzwiederverwendung in einem drahtlosen Kommunikationssystem, **dadurch gekennzeichnet, dass** es Folgendes umfasst:

ein Mittel zum Aufteilen aller für die Soft-Frequenzwiederverwendung in dem drahtlosen Kommunikationssystem verfügbaren Träger in mehrere Gruppen und für jede Zelle oder jeden Sektor zum Auswählen mindestens einer Gruppe von Trägern als eine Primärträgermenge und zum Auswählen der anderen Gruppen von Trägern als eine Sekundärträgermenge, wobei die zwei Primärträgermengen, die für zwei beliebige angrenzende Zellen oder Sektoren ausgewählt werden, nicht überlappt sind; und
ein Mittel zum Setzen einer ersten Sendeleistungsschwelle für die Primärträgermenge und zum Setzen einer zweiten Sendeleistungsschwelle für die Sekundärträgermenge, wobei die erste Sendeleistungsschwelle höher als die zweite Sendeleistungsschwelle ist.

**Revendications**

**1.** Procédé d'implémentation de la réutilisation de fréquence souple dans un système de communication sans fil, **caractérisé en ce qu'**il comprend :

la division de toutes les porteuses disponibles pour la réutilisation de fréquence souple dans le système de communication sans fil en groupes multiples ;
pour chaque cellule ou secteur, la sélection d'au moins un groupe de porteuses comme ensemble de porteuses primaires, la sélection des autres groupes de porteuses comme ensemble de porteuses secondaires, la définition d'un premier seuil de puissance d'émission pour l'ensemble de porteuses primaires, et la définition d'un second seuil de puissance d'émission pour l'ensemble de porteuses secondaires, le premier seuil de puissance d'émission étant supérieur au second seuil de puissance d'émission ;

les deux ensembles de porteuses primaires sélectionnés pour n'importe quel(le)s deux cellules ou secteurs adjacents étant non chevauchants.

2. Procédé selon la revendication 1, dans lequel toutes les porteuses disponibles pour la réutilisation de fréquence souple dans le système de communication sans fil sont divisées en groupes multiples de façon dynamique ou statique.

3. Procédé selon la revendication 1, dans lequel toutes les porteuses sont divisées en trois groupes, l'un des trois groupes est sélectionné comme l'ensemble de porteuses primaires, et les deux autres groupes sont sélectionnés comme l'ensemble de porteuses secondaires.

4. Procédé selon la revendication 1, dans lequel la puissance d'émission de la porteuse primaire n'est pas supérieure au premier seuil de puissance d'émission défini pour la porteuse primaire; et
la puissance d'émission de la porteuse secondaire n'est pas supérieure au second seuil de puissance d'émission défini pour la porteuse secondaire.

5. Procédé selon la revendication 1, dans lequel, pour chaque cellule ou secteur, l'ensemble de porteuses primaires est utilisé dans toute la cellule ou tout le secteur ; l'ensemble de porteuses secondaires est utilisé dans une zone interne de la cellule ou du secteur,
la puissance d'émission d'une porteuse de l'ensemble de porteuses primaires n'est pas supérieure au premier seuil de puissance d'émission, et
la puissance d'émission d'une porteuse de l'ensemble de porteuses secondaires n'est pas supérieure au second seuil de puissance d'émission.

6. Procédé selon la revendication 5, dans lequel la zone interne de la cellule ou du secteur est une region dont le rayon est 20%, 30% ou 50% du rayon de la cellule ou du secteur utilisant comme centre une station de base gérant la cellule ou le secteur.

7. Procédé selon la revendication 1, dans lequel le système de communication sans fil est un système de communication sans fil à porteuses multiples, et l'ensemble de porteuses primaires et l'ensemble de porteuses secondaires sont des sous-porteuses dans le système de communication sans fil à porteuses multiples.

8. Procédé selon la revendication 7, dans lequel l'ensemble de sous-porteuses primaires est utilisé par un canal du type à couverture intégrale dans la cellule ou le secteur.

9. Procédé selon la revendication 7, dans lequel l'ensemble de sous-porteuses primaires est utilisé pour porter une signalisation.

10. Procédé selon la revendication 7, dans lequel l'ensemble de sous-porteuses primaires est utilisé par un canal de service dans une zone frontalière.

11. Procédé selon la revendication 7, dans lequel le système de communication sans fil à porteuses multiples est l'un quelconque des systèmes suivants :

système à Accès Multiple par Répartition Orthogonale de Fréquence, OFDMA,
système à Accès Multiple par Répartition de Fréquence de Porteuse Unique, SC-FDMA,
système à Accès Multiple par Différence de Code à Porteuses Mutliples, MC-CDMA,
système à Accès Multiple par Différence de Code et Étalement Direct à Porteuses Multiples, MC-DS-CDMA ;
système à Accès Multiple par Différence de Code à Tonalités Multiples, MT-CDMA,
système à Accès Multiple par Répartition dans le Temps à Porteuses Multiples, MC-TDMA, et
système de communications sans fil à porteuses multiples à étalement bidimensionnel temps-fréquence.

12. Procédé selon la revendication 1, comprenant en outre :

le réglage dynamique du rapport du second seuil de puissance d'émission défini pour la porteuse secondaire sur le premier seuil de puissance d'émission défini pour la porteuse primaire.

**13.** Procédé selon la revendication 12, dans lequel le réglage dynamique du rapport comprend :

la réduction du rapport du second seuil de puissance d'émission sur le premier seuil de puissance d'émission de la cellule ou du secteur adjacent si une proportion du trafic dans une zone frontalière de la cellule ou du secteur sur un trafic total de la cellule ou du secteur augmente ; et
l'augmentation du rapport du second seuil de puissance d'émission sur le premier seuil de puissance d'émission de la cellule ou du secteur adjacent si une proportion du trafic dans la zone frontalière de la cellule ou du secteur sur un trafic total de la cellule ou du secteur diminue.

**14.** Appareil d'implémentation du procédé selon la revendication 1, comprenant :

un convertisseur série-parallèle, configuré pour convertir des données entrées sous forme série en de multiples sous-trains de données parallèles et exporter les sous-trains de données ;
un transformateur de Fourier inverse, configuré pour effectuer une transformée de Fourier inverse des sous-trains de données, et mettre en correspondance les sous-trains de données avec de multiples porteuses, respectivement ;
un convertisseur parallèle-série, configuré pour convertir les multiples porteuses en un seul train de données et exporter le train de données ;
un circuit de réglage, configuré pour multiplier les sous-trains de données parallèles exportés par le convertisseur série/parallèle par un coefficient de puissance respectivement ; le coefficient de puissance servant à régler la puissance d'émission de chaque porteuse ; et
un dispositif de commande, configuré pour commander le coefficient de puissance de chaque porteuse afin de limiter la puissance d'émission de chaque porteuse primaire au premier seuil de puissance d'émission et limiter la puissance d'émission de chaque porteuse secondaire au second seuil de puissance d'émission.

**15.** Appareil selon la revendication 14, dans lequel
le dispositif de commande est configuré pour régler dynamiquement le rapport du second seuil de puissance d'émission sur le premier seuil de puissance d'émission.

**16.** Appareil selon la revendication 15, dans lequel le dispositif de commande est configuré pour régler dynamiquement le rapport du second seuil de puissance d'émission sur le premier seuil de puissance d'émission selon le procédé de la revendication 13.

**17.** Système d'implémentation du procédé selon la revendication 1, comprenant de multiples cellules ou secteurs, chaque cellule ou secteur ayant une station de base et de multiples terminaux communiquant avec la station de base, dans lequel dans chaque cellule ou secteur,
la station de base est configurée avec l'ensemble de porteuses primaires, l'ensemble de porteuses secondaires, le premier seuil de puissance d'émission et le second seuil de puissance d'émission.

**18.** Système selon la revendication 17, la station de base comprenant l'appareil selon l'une quelconque des revendications 14 à 16.

**19.** Système selon la revendication 17 ou 18, dans lequel, dans chaque cellule ou secteur, le terminal dans une zone frontalière se voit attribuer l'ensemble de porteuses primaires ; et
le terminal dans une zone interne se voit attribuer les ensembles de porteuses secondaires et/ou de porteuses primaires.

**20.** Système d'implémentation de la réutilisation de fréquence souple dans un système de communication sans fil, **caractérisé en ce qu'**il comprend :

un moyen pour diviser toutes les porteuses disponibles pour la réutilisation de fréquence souple dans le système de communication sans fil en groupes multiples,
pour chaque cellule ou secteur, sélectionner au moins un groupe de porteuses comme ensemble de porteuses primaires, et sélectionner les autres groupes de porteuses comme ensemble de porteuses secondaires, les deux ensembles de porteuses primaires sélectionnés pour n'importe quel(le)s deux cellules ou secteurs adjacents étant non chevauchants ; et

un moyen pour définir un premier seuil de puissance d'émission pour l'ensemble de porteuses primaires, et définir un second seuil de puissance d'émission pour l'ensemble de porteuses secondaires, le premier seuil de puissance d'émission étant supérieur au second seuil de puissance d'émission.

Figure 1A

Figure 1B

Figure 1C

Figure 2

Figure 3A

Figure 3B

| | | | | | | | |
|---|---|---|---|---|---|---|---|
| 1 | | 4 | | 3 | | 2 | |
| | 3 | | 2 | | 1 | | 4 |
| 2 | | 1 | | 4 | | 3 | |
| | 4 | | 3 | | 2 | | 1 |
| 3 | | 2 | | 1 | | 4 | |
| | 1 | | 4 | | 3 | | 2 |
| 4 | | 3 | | 2 | | 1 | |
| | 2 | | 1 | | 4 | | 3 |
| 1 | | 4 | | 3 | | 2 | |
| | 3 | | 2 | | 1 | | 4 |
| 2 | | 1 | | 4 | | 3 | |

Figure 3C

| | | | | | | | |
|---|---|---|---|---|---|---|---|
| 2 | | 2 | | 2 | | 2 | |
| | 5 | | 5 | | 5 | | 5 |
| 3 | | 3 | | 3 | | 3 | |
| | 1 | | 1 | | 1 | | 1 |
| 4 | | 4 | | 4 | | 4 | |
| | 2 | | 2 | | 2 | | 2 |
| 5 | | 5 | | 5 | | 5 | |
| | 3 | | 3 | | 3 | | 3 |
| 1 | | 1 | | 1 | | 1 | |
| | 4 | | 4 | | 4 | | 4 |
| 2 | | 2 | | 2 | | 2 | |

Figure 3D

| | | | | | | | |
|---|---|---|---|---|---|---|---|
| 2 | | 5 | | 3 | | 2 | |
| | 4 | | 2 | | 5 | | 4 |
| 1 | | 6 | | 4 | | 1 | |
| | 3 | | 1 | | 6 | | 3 |
| 2 | | 5 | | 3 | | 2 | |
| | 4 | | 2 | | 5 | | 4 |
| 1 | | 6 | | 4 | | 1 | |
| | 3 | | 1 | | 6 | | 3 |
| 2 | | 5 | | 3 | | 2 | |
| | 4 | | 2 | | 5 | | 4 |
| 1 | | 6 | | 4 | | 1 | |

Figure 3E

| | | | | | | | |
|---|---|---|---|---|---|---|---|
| 5 | | 3 | | 1 | | 6 | |
| | 1 | | 6 | | 4 | | 2 |
| 6 | | 4 | | 2 | | 7 | |
| | 2 | | 7 | | 5 | | 3 |
| 7 | | 5 | | 3 | | 1 | |
| | 3 | | 1 | | 6 | | 4 |
| 1 | | 6 | | 4 | | 2 | |
| | 4 | | 2 | | 7 | | 5 |
| 2 | | 7 | | 5 | | 3 | |
| | 5 | | 3 | | 1 | | 6 |
| 3 | | 1 | | 6 | | 4 | |

Figure 3F

Figure 4

Figure 5A

Figure 5B

Figure 6

Figure 7

Figure 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020187811 A